**Europäisches Patentamt**

**European Patent Office**

**Office européen des brevets**

(19)

(11) Publication number: **0 246 756 B1**

# EUROPEAN PATENT SPECIFICATION

(12)

(45) Date of publication of the patent specification: 07.11.90

(51) Int. Cl.⁵: **G11B 33/14, G11B 23/50**

(21) Application number: 87303510.9

(22) Date of filing: 22.04.87

(54) Apparatus for communicating air between the interior and exterior of a sealed disk drive.

(30) Priority: 22.05.86 US 865698

(43) Date of publication of application:
25.11.87 Bulletin 87/48

(45) Publication of the grant of the patent:
07.11.90 Bulletin 90/45

(84) Designated Contracting States:
DE FR GB

(56) References cited:
EP-A- 0 174 705
GB-A- 2 076 208

(73) Proprietor: MAGNETIC PERIPHERALS INC., 8100-34th Avenue South, Minneapolis Minnesota 55440(US)

(72) Inventor: Blanks, John Brock, 12901 North McArthur 111, Oklahoma City, OK 73142(US)

(74) Representative: Caro, William Egerton et al, J. MILLER & CO. Lincoln House 296-302 High Holborn, London WC1V 7JH(GB)

## Description

This invention relates to apparatus for communicating air between the interior and exterior of sealed disk drives.

EP-A 0174705 discloses a relatively long, narrow tube communicating between ambient or outside air and the interior of a sealed disk drive. The tube allows pressure equalisation between the inside and outside of a disk drive housing during operation, but also retards water vapour diffusion into the housing. Humidity increases friction, particularly static friction, between a head of the disk drive and a magnetic surface of the disk, which friction undesirably reduces disk/head life.

According to the present invention there is provided apparatus for communicating air between the interior and exterior of a sealed disk drive while reducing ingress of water vapour in the drive, comprising a vent outlet mounted on the sealed disk drive and having a vent opening communicating with the sealed disk drive, and means providing a long, narrow communicating path between an inlet communicating with the exterior and an outlet communicating with the vent opening, characterised in that the means providing the communicating path comprises a vent cap having the communicating path formed as a hollow passage therein, and in that the vent cap engages sealing means mounted about the vent opening to form an airtight seal between the exterior and the vent opening except for the hollow passage.

The sealing means may, for example, be a gasket or double-sided adhesive tape, and the vent cap may have ridges forming the hollow passage, the ridges and the sealing means forming the airtight seal.

Preferably the apparatus has an O-ring mounted about a central boss on the vent cap, and a filter captured between the O-ring and the cap. The filter may be captured at an inner portion between the O-ring and the cap and at an outer portion between said double-sided adhesive tape and said disk drive. .

In a preferred embodiment the cap is circular and the passage follows the curvature of the cap.

Said passage may include at least one elbow allowing at least two portions of the passage to follow the curvature of the cap.

The invention is illustrated, merely by way of example, in the accompanying drawings, in which:-

Figure 1 is a plan view of the interior of a vent cap of an apparatus according to the present invention for communicating air between the interior and exterior of a sealed disk drive;

Figure 2 is a cross section of the cap along the line 2-2 of Figure 1;

Figure 3 is a cross section of a vent outlet and filter of the sealed disk drive; and

Figure 4 is a cross section illustrating another embodiment according to the present invention for communicating air between the interior and exterior of a sealed disk drive.

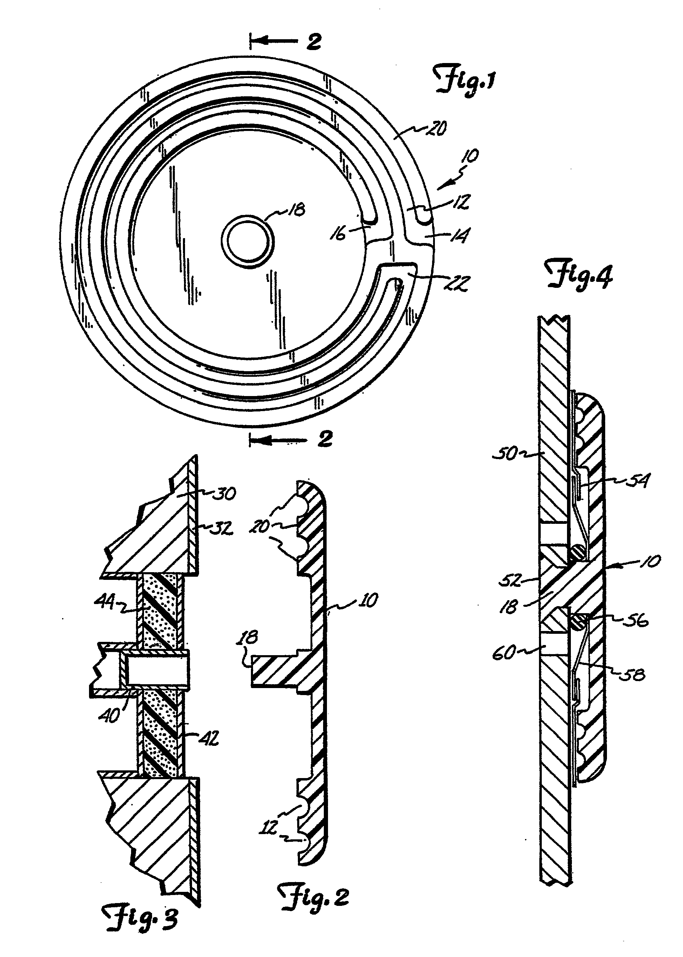

Referring first to Figure 1 there is shown a vent cap 10 of an apparatus according to the present invention for communicating air between the interior and exterior of a sealed disk drive (not shown). The cap 10 includes ridges 20 which form a hollow passage or groove 12 communicating between an inlet 14 and an outlet 16. The groove 12 is semicircular in cross section as best seen in Figure 2. Mounted at the centre of the cap 10 is an attachment boss 18, which is preferably threaded, for attaching the cap 10 to a vent outlet 30 (Figure 3) of the sealed disk drive via a correspondingly threaded bore 40. When mounted on the vent outlet 30, the ridges 20 press against a gasket 32 mounted about a vent passageway 42 making an airtight seal therewith so that the only avenue for air to communicate between the exterior and the vent passageway 42 is through the inlet 14, the groove 12 and the outlet 16. Also shown in Figure 3 is a filter 44 for filtering dust out of the air which may enter the vent passageway 42. The vent passageway 42 communicates with the interior of the sealed disk drive.

As can be seen from Figure 1, the groove 12 tracks the curvature of the circular cap 10 and doubles back on itself at an elbow 22. This provides for a long path relative to the narrow cross section of the path between the inlet 14 and the outlet 16. This long, narrow path provides for pressure equalisation during drive operation while retarding and reducing water vapour ingress.

In a preferred embodiment, the cap 10 is 2.2cm (0.875 inch) in diameter. The groove 12 is 0.8mm (0.030 inch) in diameter, and when the ridges 20 are pressed against the gasket 32, the resulting passageway is approximately 0.39 mm² (0.0006 sq. inch) in cross section. The length of the groove is approximately 12.5cm (4.9 inch).

It will be appreciated that a passage connecting the inlet 14 with the outlet 16 and formed entirely within the cap 10 is also within the scope of the present invention.

Figure 4 shows an alternative embodiment of the present invention in which the cap 10 is mounted on a top cover 50 of a sealed disk drive about the opening of a breather vent comprised of a plurality of inlet holes 60. In this embodiment, the boss 18 is inserted into a corresponding bore in the top cover 50 and heat staked to form an expanded end 52 which holds the cap 10 on the circular cover 50. The airtight seal is maintained by circular double-sided adhesive tape 54, i.e. which has adhesive on both sides. The cap 10 presses against the tape, forcing the tape to press against the top cover. The groove 12 permits air ingress and egress. The tape 54 extends inwardly to cover an outer circumferential portion of a circular filter 58 and hold in against the top cover 50. The inner circumferential portion of this filter is held against the cap 10 at the boss 18 by an O-ring 56. By this arrangement, outside air reaching the interior of the cap 10 must pass through the filter 58 to reach the air inlet holes 60 of the breather vent.

## Claims

1. Apparatus for communicating air between the interior and exterior of a sealed disk drive while reducing ingress of water vapour in the drive, comprising a vent outlet (30, 50) mounted on the sealed disk drive and having a vent opening (42, 60) communicating with the sealed disk drive, and means providing a long, narrow communicating path (1) between an inlet (14) communicating with the exterior and an outlet (16) of the sealed disc drive communicating with the vent opening, characterised in that the means providing the communicating path comprises a vent cap (10) having the communicating path (12) formed as a hollow (12) passage therein, and in that the vent cap (10) engages sealing means (32, 54) mounted about the vent (42, 60) opening to form an airtight seal between the exterior and the vent (1) and the vent opening (42, 60) except for the hollow (12) passage.

2. Apparatus as claimed in claim 1 characterised in that the vent cap has ridges (20) forming the hollow passage (12), the ridges (20) and the sealing means (32, 54) forming the airtight seal.

3. Apparatus as claimed in claim 2 characterised in that the sealing means is a gasket (32).

4. Apparatus as claimed in claim 2 characterised in that the sealing means (32, 54) is double sided adhesive tape (54).

5. Apparatus as claimed in any preceding claim characterised by an O-ring (56) mounted about a central boss (18) on the vent cap (10), and a filter (58) captured between the O-ring (56) and the vent cap (10).

6. Apparatus as claimed in claim 5 when dependent upon claim 4 characterised in that the filter (58) is captured at an inner portion between the O-ring (56) and the vent cap (10) and at an outer portion between the double sided adhesive tape (59) and the vent outlet (60).

7. Apparatus as claimed in any preceding claim characterised in that the vent cap (10) is circular and the hollow (12) passage follows the curvature of the cap (10).

8. Apparatus as claimed in claim 7 characterised in that the hollow passage (12) includes at least one elbow (22) allowing at least two portions of the passage to follow the curvature of the vent cap (10).

## Patentansprüche

1. Vorrichtung zum Luftdurchlassen zwischen dem Inneren und dem Äußeren eines abgedichteten Plattenlaufwerks unter Verringerung des Eintrittes von Wasserdampf in das Laufwerk, mit einem Belüftungsauslaß (30, 50), der an dem abgedichteten Plattenlaufwerk befestigt ist und eine Belüftungsöffnung (42, 60) aufweist, die mit dem abgedichteten Plattenlaufwerk in Verbindung steht, und mit Einrichtungen, die einen langen engen Verbindungsweg zwischen einem mit dem äußeren des abgedichteten Plattenlaufwerks in Verbindung stehenden Einlaß (14) und einem Auslaß (16) bilden, der mit der Belüftungsöffnung in Verbindung steht, dadurch gekennzeichnet, daß die den Verbindungsweg bildende Einrichtung eine Belüftungskappe (10) umfaßt, in der der Verbindungsweg als hohler Kanal (12) ausgebildet ist, und daß die Belüftungskappe (10) mit Dichtungseinrichtungen (32, 54) in Eingriff steht, die um die Belüftungsöffnung herum befestigt sind, um eine luftdichte Dichtung zwischen dem äußeren des abgedichteten Plattenlaufwerks und der Belüftungsöffnung (42, 60) mit Ausnahme des hohlen Kanals (12) zu bilden.

2. Vorrichtung nach Anspruch 1, dadurch gekennzeichnet, daß die Belüftungskappe Wülste (20) aufweist, die den hohlen Kanal (12) bilden, und daß die Wülste (20) und die Dichtungseinrichtungen (32, 54) die luftdichte Dichtung bilden.

3. Vorrichtung nach Anspruch 2, dadurch gekennzeichnet, daß die Dichtungseinrichtung eine Dichtungsscheibe (32) ist.

4. Vorrichtung nach Anspruch 2, dadurch gekennzeichnet, daß die Dichtungseinrichtung (32, 54) ein doppelseitig klebendes Band (54) ist.

5. Vorrichtung nach einem der vorhergehenden Ansprüche, dadurch gekennzeichnet, daß ein O-Ring (56) um einen in der Mitte angeordneten Vorsprung (18) auf der Belüftungskappe (10) befestigt ist, und daß ein Filter (58) zwischen dem O-Ring (56) und der Belüftungskappe (10) eingefangen ist.

6. Vorrichtung nach Anspruch 5 unter Rückbeziehung auf Anspruch 4, dadurch gekennzeichnet, daß das Filter (58) an einem Innenabschnitt zwischen dem O-Ring (56) und der Belüftungskappe (10) und an einem äußeren Abschnitt zwischen dem doppelseitig klebenden Band (54) und dem Belüftungsauslaß (60) eingefangen ist.

7. Vorrichtung nach einem der vorhergehenden Ansprüche, dadurch gekennzeichnet, daß die Belüftungskappe (10) kreisförmig ist und daß der hohle Kanal (12) der Krümmung der Kappe (10) folgt.

8. Vorrichtung nach Anspruch 7, dadurch gekennzeichnet, daß der hohle Kanal (12) zumindestens eine Umlenkung (22) einschließt, die es ermöglicht, daß zumindestens zwei Teile des Kanals der Krümmung der Belüftungskappe (10) folgen.

## Revendications

1. Dispositif pour la transmission de l'air entre l'intérieur et l'extérieur d'une unité d'entraînement de disque scellée tout en réduisant la pénétration de vapeur d'eau dans l'unité, qui comprend une sortie d'évent (30, 50) montée sur l'unité d'entraînement de disque scellée et possédant une ouverture d'évent (42, 60) qui communique avec l'unité d'entraînement de disque scellée, et des moyens qui établissent un trajet de communication long, étroit, entre une entrée (14) communiquant avec l'extérieur de l'unité d'entraînement de disque scellée et une sortie (16) communiquant avec l'ouverture d'évent, caractérisé en ce que les moyens qui établissent le trajet de communication comprennent un chapeau d'évent (10) possédant intérieurement un trajet de communication présentant la forme d'un passage creux (12), et en ce que le chapeau d'évent (10) est en contact avec des moyens d'étanchéité (32, 54) montés autour de l'ouverture d'évent pour former un joint étanche à l'air entre l'extérieur de l'unité d'entraînement de disque scellée et l'ouverture d'évent (42, 60), à l'exception du passage creux (12).

2. Dispositif selon la revendication 1, caractérisée en ce que le chapeau d'évent possède des nervures (20) qui forment le passage creux (12), les nervures (20) et les moyens d'étanchéité (32, 54) formant le joint étanche à l'air.

3. Dispositif selon la revendication 2, caractérisée en ce que les moyens d'étanchéité sont constitués par une garniture d'étanchéité plate (32).

4. Dispositif selon la revendication 2, caractérisé en ce que les moyens d'étanchéité (32, 54) sont constitués par un ruban adhésif à double face (54).

5. Dispositif selon l'une quelconque des revendications précédentes, caractérisé par une bague torque (56) montée autour d'un bossage central (18) sur le chapeau d'évent (10) et par un filtre (58) pris entre la bague torque (56) et le chapeau d'évent (10).

6. Dispositif selon la revendication 5, rattachée à la revendication 4, caractérisé en ce que le filtre (58) est pris entre la bague torique (56) et le chapeau d'évent (10) au droit d'une partie intérieure et entre le ruban adhésif à double face (54) et la sortie d'évent (60) au droit d'une partie extérieure.

7. Dispositif selon une quelconque des revendications précédentes, caractérisé en ce que le chapeau d'évent (10) est circulaire et que le passage creux (12) suit la courbure du chapeau (10).

8. Dispositif selon la revendication 7, caractérisé en ce que le passage creux (12) comprend au moins un coude (22) en permettant ainsi aux deux parties du passage de suivre la courbure du chapeau d'évent (10).

*Fig.1*

*Fig.4*

*Fig.2*

*Fig.3*